# EUROPÄISCHE PATENTSCHRIFT

(11) **EP 2 585 510 B1**
(45) Veröffentlichungstag und Bekanntmachung des Hinweises auf die Patenterteilung: **21.03.2018**
(21) Anmeldenummer: 11721312.4
(22) Anmeldetag: 25.05.2011
(51) Int. Cl.: C08G 18/42, C08G 18/66, C08G 18/76, C09J 175/06, B32B 7/12, B32B 27/32, B32B 27/34, B32B 37/12, B32B 15/08, B32B 27/08

(54) **TPU-KASCHIERKLEBSTOFF**
TPU LAMINATING ADHESIVE
ADHÉSIF À CONTRECOLLER À BASE DE TPU

(30) Priorität: 23.06.2010 DE 102010030437
(43) Veröffentlichungstag der Anmeldung: 01.05.2013
(73) Patentinhaber: Henkel AG & Co. KGaA, 40589 Düsseldorf (DE)
(72) Erfinder: KINZELMANN, Hans-Georg, 50259 Pulheim (DE); SCHMIDT, Thorsten, 8810 Horgen (CH)
(74) Vertreter: Viering, Jentschura & Partner mbB Patent- und Rechtsanwälte
(86) Internationale Anmeldenummer: PCT/EP2011/058515
(87) Internationale Veröffentlichungsnummer: WO 2011/160912

(56) Entgegenhaltungen:
- EP-A1- 0 107 097
- EP-A1- 0 158 086
- EP-A1- 2 119 735
- EP-A1- 2 316 992
- WO-A1-00/15728
- DE-A1- 2 014 170
- DE-A1- 19 514 583
- US-A- 3 538 055

## Beschreibung

Die Erfindung betrifft die Verwendung eines Schmelzklebstoffs mit einer Viskosität von 10000 mPas bis 150000 mPas bei 140°C enthaltend mindestens 75 Gew.-% eines thermoplastischen Polyurethans (TPU) mit einem zahlenmittleren Molekulargewicht M_{N} von 5000 bis 50000 g/mol als Klebstoff zum Verkleben von Foliensubstraten.. Die verwendeten Klebstoffe sollen keine Lösemittel enthalten und eine gute Verklebung von Folien ermöglichen.

Kaschierklebstoffe zum Verkleben von folienförmigen Substraten sind allgemein bekannt. Insbesondere haben sich Klebstoffe auf Basis von reaktiven Polyurethanen in der Praxis bewährt. Beispielsweise sind in der DE 102004018048 PU-Klebstoffe beschrieben, die auf Basis von PU-Prepolymeren mit endständigen Isocyanatgruppen hergestellt werden können. Diese Prepolymere weisen endständige Isocyanatgruppen auf. Sie sind zum Verkleben von Folien zu Mehrschichtverbundmaterialien einsetzbar.

Diese reaktiven Klebstoffe mit NCO-Gruppen haben den Nachteil, dass in der Klebstoffschicht nach dem Herstellen der Mehrschichtfolien immer noch nicht reagierte monomere Isocyanate enthalten sein können. Diese sind zwar nur in geringen Mengen enthalten, sind aber physiologisch bedenklich. Sie können mit Wasser abreagieren, ergeben dann aber primäre Amine, insbesondere primäre aromatische Amine. Niedermolekulare Isocyanate oder niedermolekulare Amine sind jedoch nicht fest in der Klebstoffmatrix verbunden, sondern sie können ggf. im Laufe der Zeit in die Folie wandern. Da solche Folienmaterialien aber zur Herstellung von Verpackungen für Lebensmittel eingesetzt werden, ist dieser geringe Anteil von solchen migrationsfähigen Stoffen problematisch.

Zur Vermeidung solcher lebensmitteltechnisch problematischer Migrate werden in der WO 02/43956 flexible Verpackungslaminate beschrieben, die nur einen geringen Anteil von Migraten enthalten. Insbesondere werden dort Poly-α-Olefine, Polyester oder andere thermoplastische Materialien beschrieben. Weiterhin werden auch als weitere Polymere Acrylester erwähnt, synthetische Elastomere, EVA. Polyethylen sowie andere Vinylcopolymere. Da diese Polymere ohne Isocyanate hergestellt werden, sind folgerichtig auch keine solchen Verunreinigungen enthalten.

Solche Klebstoffe haben aber häufig verschiedene Nachteile in der Haftung und Klebkraft zu den Substraten. Diese Klebstoffe enthalten aber noch eine Reihe von Additiven, z.B. Harze oder Weichmacher, die zur geeigneten Verarbeitung notwendig sind. Diese sind im Verhältnis zum Polymer aber immer noch niedermolekular. Auf Dauer ist es problematisch, dass diese Hilfsstoffe in die verklebten Folien migrieren können. Es hat sich gezeigt, dass die guten Eigenschaften von Polymeren, die Urethan- oder Harnstoffgruppen enthalten, auf verschiedenen Substraten nicht erzielt werden.

Die EP 1 323 800 beschreibt eine Mehrschichtfolie, die eine Polyethylenschicht aufweist, auf dieser Schicht einen thermoplastischen Urethanfilm. Eine Seite mit dem Urethanfilm soll das Verkleben zu polaren Substraten ermöglichen, die andere Seite aus Polyethylen dient als Klebstoff für ein anderes nicht polares Substrat. Beide Filme können zusammen coextrudiert werden. Als Verwendungszweck wird das Verkleben von Schuhmaterialien beschrieben.

Bei der Herstellung von Verbundfolien werden häufig kontinuierliche Verfahren angewendet. Es werden die Folien in Bahnen ggf. bedruckt, beschichtet, verklebt und danach aufgerollt und gelagert oder konfektioniert. Dabei ist es notwendig, dass der Klebstoff nur in dünnen Schichten auf die Folien aufgetragen wird. Dieses Erfordernis ist einerseits kommerziell bedingt, da eine erhöhte Klebstoffmenge das Produkt unnötig verteuern würde, andererseits ist der dünne Schichtauftrag auch technisch zweckmäßig. In dickeren Schichten können Verfärbungen der Folien beobachtet werden. Weiterhin wird eine maximal mögliche Haftung bei einer bestimmbaren Schichtdicke erreicht, bei weiter erhöhter Schichtdicke wird diese häufig verschlechtert und die Flexibilität der Folie auch negativ beeinflusst. Aufgabe der vorliegenden Erfindung ist es deswegen einen thermoplastischen Polyurethanklebstoff bereitzustellen, der zur Verwendung als Kaschierklebstoff geeignet ist. Dabei soll der Klebstoff in dünnen Schichten aufgetragen werden können, weiterhin sollen die Anteile an migrierbaren, gesundheitsschädlichen Substanzen, wie Lösemittel, Isocyanate, aromatische Amine, Acrylatmonomere vermieden werden. Außerdem sollen mit einer Klebstoffschicht versehene Folien gelagert werden können.

Die Aufgabe wird gelöst durch die Verwendung eines Schmelzklebstoffs mit einer Viskosität von 10000 mPas bis 150000 mPas bei 140°C enthaltend mindestens 75 Gew.-% eines thermoplastischen Polyurethans (TPU) mit einem zahlenmittleren mittleren Molekulargewicht von 5000 bis 50000 g/mol als Klebstoff zum Verkleben von Foliensubstraten.

Ein weiterer Gegenstand der Erfindung ist ein Folienverbund enthaltend eine Kunststofffolie und eine metallisierte oder Metall-Folie, die flächig durch einen TPU-Klebstoff gemäß einer Verwendung, der nachstehend genannten Ausführungsformen 1 bis 6, miteinander verbunden sind. Zudem ist ein weiterer Gegenstand der Erfindung ein Folienverbund aus einen Kunststoffsubstrat und einer Folie, die an mindestens einem Randbereich mit einem TPU-Klebstoff gemäß einer Verwendung, der nachstehend genannten Ausführungsformen 6 bis 11, miteinander verbunden sind. Bevorzugt besteht der Folienverbund aus einer flexiblen Folie und einem Kunststoffsubstrat, der durch einen thermoplastischen Polyurethanklebstoff vollflächig oder in Teilbereichen miteinander verklebt ist. Dabei können die Gegenstände als Mehrschichtfolie ausgebildet sein oder als Verbund aus einem Foliensubstrat und einem geformten Kunststoffbehälter.

Der erfindungsgemäß zu verwendende Schmelzklebstoff besteht dabei aus den an sich bekannten Klebstoffkomponenten, einem thermoplastischen Polyurethan, Stabilisatoren, Antioxidantien, Haftvermittlern sowie gegebenenfalls Füllstoffe, Pigmente und/oder geringen Anteilen von klebrigmachenden Harzen.

Ein erfindungsgemäß geeigneter Klebstoff muss mindestens 75 Gew.-% eines thermoplastisches Polyurethans (TPU) mit einem zahlenmittleren Molekulargewicht M_{N} von 5000 bis 50000 g/mol enthalten. Dieses ist nicht reaktiv. Dabei besteht das Polyurethan aus Polyolen und Polyisocyanaten. Es können die bekannten Ausgangsmaterialien eingesetzt werden, es ist nur sicherzustellen, dass das Polymer keine reaktiven NCO-Gruppen mehr enthält. Es können beispielsweise aliphatische Polyole, Polyesterpolyole, Polyetherpolyole, oleochemische Polyole, Polycarbonatpolyole zum Aufbau der TPU eingesetzt werden.

Beispiele für aliphatische Polyole sind Ethylenglykol, Propylenglykol, Butandiol-1,4, Pentandiol-1,5, Hexandiol-1,6, Heptandiol-1,7, Octandiol-1,8 und deren höhere Homologen oder Isomeren. Ebenfalls geeignet sind höherfunktionelle Alkohole wie beispielsweise Glycerin, Trimethylolpropan, Pentaerythrit sowie oligomere Ether der genannten Substanzen mit sich selbst oder im Gemisch aus zwei oder mehr der genannten Ether untereinander.

Eine bevorzugte Polyolkomponente sind Umsetzungsprodukte niedermolekularer polyfunktioneller Alkohole mit Alkylenoxiden, sogenannte Polyether. Die Alkylenoxide weisen vorzugsweise 2 bis 4 C-Atome auf. Geeignet sind beispielsweise die Umsetzungsprodukte von Ethylenglykol, Propylenglykol, isomeren Butandiolen, Hexandiol oder 4,4'-Dihydroxy-diphenylpropan mit Ethylenoxid, Propylenoxid, Butylenoxid oder Gemischen davon. Ferner sind auch die Umsetzungsprodukte polyfunktioneller Alkohole, wie Glycerin, Trimethylolethan oder Trimethylolpropan, Pentaerythrit, Zuckeralkohole oder Gemische mit den genannten Alkylenoxiden zu Polyetherpolyolen geeignet. Die Polyetherpolyole werden in dem Fachmann bekannter Weise durch Umsetzung der Startverbindung über ein reaktives Wasserstoffatom mit den genannten Alkylenoxiden hergestellt. Solche Polyetheralkohole sind kommerziell erhältlich.

Eine weitere Gruppe geeigneter Polyole sind Polyesterpolyole. Derartige Polyesterpolyole umfassen bevorzugt die Umsetzungsprodukte von polyfunktionellen, vorzugsweise difunktionellen Alkoholen und polyfunktionellen, vorzugsweise difunktionellen und/oder trifunktionellen Carbonsäuren. Anstatt freier Polycarbonsäuren können auch die entsprechenden Polycarbonsäureanhydride oder entsprechende Polycarbonsäureester mit Alkoholen mit vorzugsweise 1 bis 3 C-Atomen eingesetzt werden. Zur Herstellung derartiger Polyesterpolyole geeignet sind insbesondere Hexandiol, 1,4-Hydroxymethylcyclohexan, 2-Methyl-1,3-propandiol, Butantriol-1,2,4, Triethylenglykol, Tetraethylenglykol, Ethylenglykol, Polyethylenglykol, Dipropylenglykol, Polypropylenglykol, Dibutylenglykol und Polybutylenglykol.

Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet. Gegebenenfalls können untergeordnete Mengen an monofunktionellen Fettsäuren im Reaktionsgemisch vorhanden sein. Die Polyester können gegebenenfalls einen geringen Anteil an Carboxylendgruppen aufweisen.

Auch Polyesterpolyole aus Lactonen, beispielsweise auf Basis von ε-Caprolacton, auch Polycaprolactone genannt, oder aus Hydroxycarbonsäuren, beispielsweise ω-Hydroxycapronsäure, sind ebenfalls geeignet.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäuren-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole Dimerdiole sowie Rizinusöl und dessen Derivate.

Auch die Hydroxy-funktionellen Polybutadiene, wie sie z.B. unter dem Handelsnamen "Poly-bd" erhältlich sind, können für die erfindungsgemäßen Zusammensetzungen als Polyole eingesetzt werden. Ebenfalls geeignet sind PolycarbonatPolyole.

Geeignete Polyole können ein Molekulargewicht von 250 bis 10000 g/mol aufweisen. Insbesondere sind Diole geeignet. Ebenso ist es möglich Anteile der Polyole durch aminfunktionelle analoge Verbindungen zu ersetzen. Beispielsweise können difunktionelle sekundäre Polyamine oder Amin-terminierte Polyether zugesetzt werden.

Es ist möglich auch geringe Mengen an Monoalkolholen einzusetzen. Diese Alkohole können zum Steuern des Molekulargewichts zugesetzt werden. Damit werden NCO-Gruppen am Kettenende abreagiert, ohne das Molekulargewicht wesentlich zu erhöhen.

Geeignete Isocyanate zur Herstellung der TPU sind aromatische, aliphatische oder cycloaliphatische Polyisocyanate. Diese können beispielsweise ausgewählt sein aus 4,4'-Diphenylmethandiisocyanat (MDI), hydriertes oder teilhydriertes MDI (H12MDI, H6MDI), Xylylendiisocyanat (XDI), Tetramethylxylylendiisocyanat (TMXDI), 4,4'-Diphenyldimethylmethandiisocyanat, Di- und Tetraalkylendiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), Tetramethoxybutan-1,4-diisocyanat, Naphthalin-1,5-diisocyanat (NDI), Butan-1,4-diisocyanat, Hexan-1,6-diisocyanat (HDI), Dicyclohexylmethandiisocyanat, 2,2,4-Trimethyl-hexan-2,3,3-Trimethyl-hexamethylendiiso-cyanat, Cyclohexan-1,4-diisocyanat, Ethylen-diisocyanat, Methylentriphenyltriisocyanat (MIT), Phthalsäure-bis-isocyanato-ethylester, Trimethylhexamethylendiisocyanat, 1,4-Diisocyanatobutan, 1,12-Diisocyanato-dodecan und Dimerfettsäurediisocyanat, Lysinesterdiisocyanat, 4,4-Dicyclohexylmethan diisocyanat, 1,3-Cyclohexan- oder 1,4-Cyclohexandiisocyanat.

Als trifunktionelle Isocyanate geeignet sind solche Isocyanate, die durch Trimerisation oder Oligomerisation von Diisocyanaten oder durch Reaktion von Diisocyanaten mit trifunktionellen hydroxylgruppenhaltigen Verbindungen entstehen. Beispiele dafür sind Trimerisierungsprodukte der Isocyanate HDI, MDI oder IPDI oder Addukte aus Diisocyanaten und niedermolekularen Triolen, wie Trimethylolpropan oder Glycerin.

Die Mengen der NCO und der OH-Gruppen zur Synthese der TPU werden so gewählt, dass ein NCO:OH-Verhältnis unter 1 umgesetzt wird, beispielsweise von 0,75 bis 0,99 : 1, insbesondere von 0,80 bis 0,95 : 1. Dabei entstehen TPU, die noch weitere OH-Gruppen aufweisen. Eine andere Ausführungsform stellt zuerst ein NCO-haltiges Vorprodukt her durch Reaktion mit einem NCO:OH-Verhältnis über 1, beispielsweise von 1,02 bis 1,2 : 1, dieses wird danach mit Monoalkoholen oder Monoaminen an den Endgruppen vollständig umgesetzt. Dabei entstehen nicht funktionalisierte Kettenenden.

Eine bevorzugte Ausführungsform der Erfindung setzt aromatische Isocyanate ein. Eine weitere bevorzugte Ausführungsform verwendet als Polyol Polyesterdiole.

Eine Ausführungsform der Erfindung setzt insbesondere Schmelzklebstoffe ein, die nach dem Auftragen als Schicht eine haftklebrige Oberfläche aufweisen. Diese Ausführungsform kann durch die Auswahl des TPU unterstützt werden. Beispielsweise führt eine erhöhte Anzahl von OH-Gruppen des Polymeren zu einer erhöhten Klebrigkeit. Deswegen wird für entsprechende Polymere ein NCO:OH- Verhältnis von 0,75 bis 0,9 : 1 gewählt, insbesondere oberhalb 0,8:1. Die Haftklebrigkeit kann zusätzlich durch Additive, wie im Folgenden angegeben, unterstützt werden.

Eine andere Ausführungsform der Erfindung stellt Klebstoffschichten auf einer Folie her, wobei die Klebstoffschichten eine blockfeste Oberfläche aufweisen. Dabei ist die Klebstoffschicht gegen die Trägerfolie stapelbar. Eine Verklebung wird durch Verkleben unter Druck und erhöhter Temperatur mit einem zweiten Substrat erzielt. Geeignete Klebstoffe für diese Ausführungsform weisen keine Haftklebrigkeit auf, sie sind blockfest.

Es können die oben genannten TPU eingesetzt werden, die Blockfestigkeit kann durch die Auswahl der Polymerkomponenten beeinflusst werden. Insbesondere führen Bestandteile, die zur einer erhöhten Kristallinität des TPU führen, zu einer Verbesserung der Blockfestigkeit. Insbesondere werden Polyesterpolyole als Bestandteil des TPU eingesetzt, beispielsweise mehr als 70 Gew.-% bezogen auf die Polyolkomponente oder ausschließlich, ganz besonders bevorzugt solche, die aromatische Polycarbonsäuren enthalten. Weiterhin kann durch ein erhöhtes NCO:OH-Verhältnis, beispielsweise zwischen 0,85 :1 bis 0,99 : 1 die Oberflächenklebrigkeit vermindert werden.
In einer ganz bevorzugten Ausführungsform werden der Polyolkomponente bei der Herstellung des TPU zusätzlich kurzkettige aliphatische Diole und Triole mit weniger als 8 C-Atomen zugesetzt. Die Menge der niedermolekularen Polyole in Bezug auf die polymere Polyolkomponente von 0,5 bis 10 Gew.-% betragen, insbesondere zwischen 1 und 7 Gew.-%. Solche TPU weisen eine erhöhte Kristallinität auf. Sie sind insbesondere für eine Verwendung als Klebstoff der Ausführungsform mit blockfester Oberfläche geeignet.

Die Umsetzung kann durch bekannte Verfahren erfolgen und die erfindungsgemäß geeigneten PU-Polymere so hergestellt werden. Das kann beispielsweise bei Raumtemperatur geschehen, es können auch erhöhte Temperaturen angewandt werden. Die Ausgangsverbindungen reagieren im Allgemeinen spontan miteinander, es kann aber auch notwendig sein, dass Katalysatoren, wie metallorganische Verbindungen oder organische Aminoverbindungen zugesetzt werden. Dabei sind beispielsweise Katalysatoren auf Sn-Basis oder auf Basis von tert. Aminen geeignet. Bevorzugt können aber Katalysatoren vermieden werden. In einer weniger bevorzugten Form ist es auch möglich, die Reaktion in Lösemitteln durchzuführen und danach das Lösemittel aus der Mischung zu entfernen.

Es sollen nicht vernetzende TPU erhalten werden. Diese enthalten also nach ihrer Herstellung keine NCO-Gruppen mehr. Weiterhin ist es bevorzugt, wenn zur Herstellung überwiegend Diole und Diisocyanate eingesetzt werden. Es werden dann weitgehend lineare Produkte erhalten, die thermoplastisches Verhalten zeigen. Die erfindungsgemäß geeigneten Polyurethane können unterschiedliche Segmente in der Polymerkette enthalten, beispielsweise können harte und weiche Segmente enthalten sein. Es können aber auch Mischungen von TPU mit unterschiedlicher chemischer Zusammensetzung vorliegen. Der Schmelzklebstoff enthält mindestens 75 Gew.-% eines termoplastischen Polyurethans (TPU) mit einem zahlenmittleren Molekulargewicht M_{N} von 5000 bis 50000 g/mol. Das Molekulargewicht (Zahlenmittel, M_{N}, wie über GPC gegen Polystyrolstandard bestimmbar) der TPU soll zwischen 5000 bis 50000 g/mol liegen, insbesondere zwischen 10000 und 40000g/mol.

Die erfindungsgemäß geeigneten Klebstoffe können zusätzlich noch weitere Additive oder Zusatzstoffe enthalten. Beispiele dafür sind weitere thermoplastische Polymere, Stabilisatoren, Haftvermittler, Antioxidantien, sowie gegebenenfalls Füllstoffe, Pigmente und/oder geringe Anteile klebrigmachender Harze.

Als zusätzliche inerte Polymere können dabei thermoplastische Elastomere, Polyamide, Ethylencopolymere, Polyolefine oder Polyester eingesetzt werden. Beispiele für thermoplastische Elastomere sind Blockcopolymere, enthaltend einen oder mehrere aromatischen Polyvinylblock und mindestens einen gummielastischen Block zum Beispiel einen Polystyrolblock und einen im Wesentlichen kautschukartigen Polybutadien- oder Polyisoprenblock. Zur Verbesserung der Wärmestabilität kann der Polybutadien- bzw. Polyisoprenblock teilweise oder ganz hydriert sein. Derartige Blockcopolymere werden als S-B-S- (Styrol-Butadien-Styrol-)Copolymer, als S-I-S-(Styrol-Isopren-Styrol)Copolymer oder als S-E-B-S-(Styrol-Ethylen-Butadien-Styrol)-Copolymer von verschiedenen Herstellern angeboten.

Beispiele für weiter zusätzliche Polymere sind Ethylenvinylacetatpolymere. Solche EVA sind dem Fachmann bekannt und können in verschiedenen Molekulargewichten erhalten werden. Es ist ebenfalls möglich, dass diese EVA funktionelle Gruppen aufweisen, die beispielsweise die Verträglichkeit oder die Polarität des Polymeren beeinflussen. Es können auch Polyester zugesetzt werden, soweit diese thermoplastische Verhalten zeigen. Dabei erhöhen aliphatische Anteile im Polyester die Flexibilität des Polymeren, aromatische Bestandteile erhöhen die Festigkeit.

Prinzipiell ist sicherzustellen, dass die zusätzlichen Polymere mit dem TPU verträglich sind und auch im geschmolzenen Klebstoff sich nicht separieren. Ein erfindungsgemäß geeigneter Klebstoff enthält mindestens 75 Gew.-% TPU, bezogen auf die Summe der Polymere, bevorzugt mindestens 85 Gew.-%, insbesondere mehr als 97 Gew.-% TPU-Polymere.

Ein erfindungsgemäß geeigneter Klebstoff kann auch Haftvermittler enthalten. Es kann sich dabei auch um reaktive Substanzen handeln, die mit der Substratoberfläche eine Reaktion eingehen können.

Beispiele für geeignete Haftvermittler sind organofunktionelle Silane, wie hydroxyfunktionelle, (meth)acryloxyfunktionelle, mercaptofunktionelle, aminofunktionelle oder epoxyfunktionelle Silane, die zusätzlich hydrolysierbare Silansubstituenten enthalten. Beispiele für mercaptofunktionelle Silane sind 3-Mercapto propyltrimethoxysilan oder 3-Mercaptopropyltrimethoxysilan. Beispiele für (meth)acryloxyfunktionelle Silane sind 3-Acryloxypropyltrialkoxysilan oder 3-Methacryloxypropyltrialkoxysilan. Beispiele für epoxyfunktionelle Silane sind 3-Glycidyloxymethyltrimethoxysilan, 3-Glycidyloxymethyltriethoxysilan oder 2-Glycidoxyethyltrimethoxysilan. Beispiele Aminopropylmethyldimethoxysilan, N-(2-Aminoethyl)-3-aminopropyltrimethoxysilan (DAMO), N,N-Di(2-Aminoethyl)-3-aminopropyltrimethoxysilan, N-(2-Aminoethyl)-N'-(2-aminoethyl)-3-aminopropyltri-methoxysilan, Bis-(Triethoxysilylpropyl)-amin, N-(n-Butyl)-3-aminopropyltriethoxysilan oder Mischungen daraus. Entsprechend geeignete Verbindungen sind ebenfalls die analogen Ethoxy- oder Propoxyderivate, ebenso Alkyldialkoxyderivate oder die anstelle der jeweiligen Propylgruppe durch andere Alkylgruppe ersetzten Derivate. Weiterhin können als Haftvermittlerkomponente auch Kondensate der zuvor genannten Aminosilane verwendet werden. Solche Haftvermittler sind in der Literatur bekannt. Diese können gegebenenfalls mit den Substraten eine chemische Reaktion eingehen.

Die vorgenannten Haftvermittler werden in dem Klebstoff in Mengen zwischen 0 bis 10 Gew.-%, vorzugsweise zwischen 0,2 und 5 Gew.-%, besonders bevorzugt zwischen 0,5 und 3 Gew.-% eingesetzt werden.

Darüber hinaus können dem Schmelzklebstoff übliche Stabilisatoren zugesetzt werden. Es handelt sich um Verbindungen, die die Polymere während der Verarbeitung vor Zersetzung zu schützen. Es kann sich um Antioxidantien handeln, Stabilisatoren gegen Feuchtigkeit oder Lichtschutzmittel. Sie werden üblicherweise in Mengen bis zu 3 Gew.-%, vorzugsweise in Mengen von etwa 0,1 bis 2,0 Gew.-% dem Schmelzklebstoff beigefügt.

Als weiteren Bestandteil kann ein erfindungsgemäß geeigneter Schmelzklebstoff geringe Mengen klebrigmachender Harze enthalten. Das Harz bewirkt eine zusätzliche Klebrigkeit. Es handelt sich dabei beispielsweise um Harze, die einen Erweichungspunkt von 70 bis 130 °C (Ring-Ball-Methode, DIN 52011) besitzen. Es kann sich dabei beispielsweise um aromatische, aliphatische oder cycloaliphatische Kohlenwasserstoff-Harze handeln oder sowie modifizierte oder hydrierte KW-Harze. Weitere Beispiele sind Hydroabietylalkohol und seine Ester; modifizierte Naturharze; Alkylester von gegebenenfalls teilhydriertem Kolophonium; Terpen-Harze sowie hydrierte Derivate davon; Acrylsäure-Copolymerisate, vorzugsweise Styrol-Acrylsäure-Copolymere und Harze auf Basis funktioneller Kohlenwasserstoffharze. Solche Harze können in einer Menge von 0 bis 15 Gew.-% bezogen auf den gesamten Klebstoff, bevorzugt werden jedoch 0 oder bis zu 5 Gew.-%, eingesetzt. Harze sind weniger geeignet, wenn die Ausführungsform als blockfester Klebstoff gewählt wird.

In einer weniger bevorzugten Ausführungsform ist es auch möglich, dem Klebstoff Farbstoffe, Pigmente oder Füllstoffe zuzusetzen. Die Menge soll dabei unter 10 Gew.-% betragen. Insbesondere soll der erfindungsgemäße Klebstoff bevorzugt keine Lösemittel, Weichmacher oder Wachse enthalten, um die Viskosität zu beeinflussen. Auch ist es möglich geeignete Schmelzklebstoffe ohne Zusatz von Harzen herzustellen. Es sollen insbesondere solche Verbindungen nicht enthalten sein, die migrieren können und so aus dem Klebstoff in benachbarte Schichten diffundieren können.

Die Verwendung der vorliegenden Erfindung betrifft einen Schmelzklebstoff. Er enthält mindestens 75 Gew.-% eines oder mehrerer thermoplastischer Polyurethane. Eine andere Ausführungsform kann zusätzlich bis zu 20 Gew.-% weitere thermoplastische Polymere, 0,2 und 5 Gew.-% Haftvermittler, bis zu 2 Gew.-% Stabilisatoren, sowie bis zu 15 Gew.-% Harze, wobei die Summe der Bestandteile 100% ergeben soll. Erfindungsgemäß geeignete Klebstoffe haben eine Viskosität von 10000 mPas bis 150000 mPas bei 140°C. Insbesondere soll die Viskosität von 40000 bis 80000 mPas betragen (nach EN ISO 2555; Kegel/Platte-Messkopf, 140°C, Scherrate 50 s⁻¹). Niedrige Viskositäten sind für die erfindungsgemäße Verwendung günstig, um eine dünnen Schichtdicke des Klebstoffs zu erhalten. Dabei werden die Substrate durch die geringe Wärmekapazität dieser Klebstoffschicht thermisch wenig belastet.

Insbesondere kann der Klebstoff frei von Harzen sein. Weiterhin ist ein geeigneter Klebstoff als verklebte Klebstoffschicht im Wesentlichen frei von niedermolekularen Substanzen, d.h. er enthält keine migrationsfähigen Bestandteile. Auch mögliche Rest- NCO-Gruppen sind schon bei der Herstellung der TPU abreagiert.

Als migrationsfähige Bestandteile, die im Allgemeinen niedermolekular sind, werden beispielsweise Substanzen verstanden, die ein Molekulargewicht von weniger als 1000 g/mol aufweisen. Diese Bestandteile können entweder selbst migrieren oder sie sind in wässrigen Lösungen oder wässrigen Lösungen mit organischen Bestandteilen, beispielsweise alkoholischen Lösungen, aus dem Klebstoff extrahierbar. Durch die Auswahl der erfindungsgemäß geeigneten TPU ist es möglich, dass die Verwendung solcher niedermolekularen Verbindungen eingeschränkt wird oder völlig vermieden werden kann.

Die erfindungsgemäß geeigneten Klebstoffe werden bevorzugt als Kaschierklebstoff zum Verkleben von flexiblen Folien eingesetzt. Es können dabei die bekannten Folien oder bahnenförmigen Substrate eingesetzt werden. Diese können beispielsweise aus Metallfolien, Papierfolien und/oder Kunststofffolien als Einzel- oder Mehrschichtfolie bestehen. Diese können bedruckt oder beschichtet sein. Diese Folien können entweder gegeneinander kaschiert werden, es ist auch möglich sie auf andere Substrate, wie insbesondere Kunststoffe, als geformte Substrate zu verkleben.

Dabei ist es möglich, dass die Oberfläche der Substrate vor dem Verkleben bearbeitet wird. Üblich ist eine Reinigung von anhaftenden losen Bestandteilen. Weiterhin ist es möglich, ggf. die Oberflächen zu aktivieren, zum Beispiel durch Plasma- oder Corona-vorbehandlung, oder es werden Primer auf ein Substrat aufgetragen. Insbesondere ist bei der Verwendung der erfindungsgemäßen Klebstoffe eine Verwendung von Primern nicht notwendig.

Die Substrate können auf der Oberfläche beschichtet oder bedruckt sein. Dabei kann die bedruckte Fläche mit dem Klebstoff beschichtet werden, oder eine bedruckte Folie wird als zweite Substratoberfläche gegen eine mit dem Klebstoff beschichtete Oberfläche verklebt. Erfindungsgemäß ist es vorteilhaft, wenn der Klebstoff farblos und transparent ist. Ein mögliches Druckbild soll nicht beeinträchtigt werden. Die Schichtstärke des Klebstoffs soll dabei zwischen 0,5 bis 100 µm betragen, insbesondere bis 20 µm bevorzugt von 1 bis 10 µm, insbesondere unter 5 µm.

Dabei wird der Schmelzklebstoff auf eine Temperatur zwischen 80 und 200°C gewärmt, bevorzugt von 100°C bis 180°C. Dabei wird er flüssig und kann in dünner Schicht auf ein Substrat aufgetragen werden. Es können dabei die bekannten Auftragsverfahren wie Walzen, Rakeln oder durch Schlitzdüsen durchgeführt werden. Die Viskosität des Klebstoffs wird dem Auftragsverfahren angepasst. Der Fachmann kann unter Beachtung der thermischen Stabilität des Schmelzklebstoffs eine geeignete Auftragstemperatur und damit eine angepasste Viskosität des Schmelzklebstoffs einstellen. Eine Ausführungsform der Erfindung arbeitet so, dass unmittelbar nach dem Auftragen der Klebstoffschicht eine zweite Folie als weiteres Substrat auf die beschichtete Fläche aufgetragen und durch Druck miteinander verklebt.

Eine andere Ausführungsform wird so ausgeführt, dass eine Folie mit einem Klebstoff ganz oder teilweise beschichtet wird. Dabei wird ein Klebstoff in einer nicht haftklebrigen Zusammensetzung aufgetragen, und es entsteht nach dem Abkühlen eine nicht haftklebrige Schicht. Diese ist nicht blockend. Ein so beschichtetes Substrat kann gelagert werden, auch als aufgerollte Folie. Diese kann dann zur Weiterverarbeitung wieder abgerollt werden. Unter Einwirkung von Wärme wird die Klebstoffschicht aktiviert und kann danach mit einer zweiten gleichen oder unterschiedlichen Substratfolie unter Druck verklebt werden.

Unter blockfest oder nicht blockierende Beschichtung ist zu verstehen, dass eine Klebstoffschicht ohne Schutzschicht zu einer weiteren Trägerfolie aufeinander gelagert werden kann. Dabei liegt eine Klebstoffschicht einer Folienschicht gegenüber. Solche Schichten können ohne große Anhaftung voneinander getrennt werden.

Als Test zur Blockfestigkeit im Sinne der Erfindung wird ein Verfahren verstanden, bei dem ein beschichtetes Foliensubstrat, beispielsweise eine Polyesterfolie, mit einem erfindungsgemäßen Klebstoff mit ca. 10 µm beschichtet wird. Diese Klebstoffschicht wird abgekühlt und eine Fläche von 100 cm² gegen ein unbeschichtetes gleiches Foliensubstrat gepresst. Es wird ein Druck von 10 to für 24 Stunden angewendet. Danach sollen die Schichten durch Ziehen von Hand getrennt werden. Dabei wird eine adhäsive Trennung beobachtet, es tritt kein Folienriss des Substrates auf oder ein kohäsiver Bruch.

Derartig erfindungsgemäß beschichtete Substrate können bei der Herstellung von Laminaten und Verbunden weiterverarbeitet werden. Dazu werden diese mit einem weiteren Substrat heiß verpresst. Darunter versteht man, dass die Klebstoffschicht des beschichteten Substrates durch Hitze reaktiviert wird und durch Druck mit dem anderen Substrat flächig verbunden wird und anschließend die Aushärtung erfolgt. Die Temperatur soll dabei zwischen 80 bis 180°C betragen. Der Pressdruck beim Vorgang des Heißverpressens liegt maschinenabhängig und abhängig von den herzustellenden Laminaten oder Verbunden üblicherweise im Bereich von 5 bis 200 bar. Die Einstellung des für die jeweilige Kombination optimalen Drucks liegt im Erfahrungsbereich des Fachmanns.

Gegenstand der Erfindung ist auch ein Folienverbund hergestellt aus mindestens einer Folie und einem Kunststoffsubstrat, die mit einer Klebstoffschicht eines erfindungsgemäß geeigneten Kaschierklebstoffs verklebt sind, der auf TPU aufgebaut ist. Es handelt sich dabei um die bekannten flexiblen Folien oder Mehrschichtfolien aus Kunststoffmaterialien, die für Verpackungen geeignet sind. Gegebenenfalls können auch weitere zusätzliche Schichten enthalten sein, wie metallisierte Schichten oder SiOx-Schichten. Als zweites Substrat kann eine Kunststofffolie oder eine Metallfolie verklebt werden oder es werden Mehrschichtfolien als Substrate verklebt. Dabei werden mindestens zwei Schichten mit dem entsprechenden Kaschierklebstoff miteinander verbunden. In einer weiteren Ausführungsform wird eine (Mehrschicht) Folie mit einem geformten Kunststoffsubstrat verklebt. Dieser kann fest sein oder auch flexible Eigenschaften aufweisen.

Die erfindungsgemäß geeigneten Klebstoffe weisen eine gute Adhäsion zu den Substraten auf. Beispielsweise zeigen Folien auf Basis von Polyestern, Polyolefinen, Polyamiden oder Ethylenvinylacetat zeigen eine gute Haftung zu dem Klebstoff. Ebenso sind feste Substrate, zum Beispiel aus Polystyrol, gut zu verkleben Insbesondere ist die Haftung zu Aluminiumfolien oder Oberflächen sehr gut. In einer Ausführungsform werden die Substrate vollflächig durch haftklebrige TPU miteinander verklebt. Es können so stabile Mehrschichtverbundfolien erhalten werden.

Nach einer anderen Ausführungsform der Erfindung werden zwei Substrate nur in einem oder mehreren Randbereichen verklebt. Dabei werden diese Bereiche beispielsweise so gewählt, dass eine in sich geschlossene Verklebung, z.B. in Form eines Rings, der Substrate miteinander erfolgt. Dabei werden entsprechend dieser Ausführungsform, beispielsweise eine bereits räumlich geformte Mehrschichtfolie oder ein festes Substrat, z.B. in Form eines Napfes, mit einer erfindungsgemäß beschichteten Folie verklebt. Dabei kann der erfindungsgemäß geeignete Schmelzklebstoff auf einem vorbestimmten Verklebungsbereich aufgetragen sein. Dieser wird dann mit dem geformten Folienkörper versiegelt.

Eine Ausführungsform wählt den Klebstoff so aus, dass ein Adhäsionsbruch beobachtet wird. Dabei können dann die verklebten Substrate getrennt werden. In einer weiteren Ausführungsform wird der erfindungsgemäß geeignete Klebstoff so gewählt, dass die Kohäsion der Klebstoffschicht geringer ist als die Adhäsion. Dadurch ist es möglich, die beiden verklebten Substrate mechanisch voneinander zu trennen. Es ist ein kohäsiver Bruch der Klebstoffschicht zu beobachten. Dabei werden nach dem Trennen zwei Oberflächen erhalten, die eine haftklebrige Eigenschaft aufweisen. Es werden wiederverklebbare Oberflächen erhalten. Da diese Randbereiche beispielsweise durch die Form der Verpackung übereinander angeordnet sind, können diese leicht gegeneinander verklebt werden. Der Folienverbund, der durch einen erfindungsgemäßen TPU-Klebstoff verklebt ist, kann deswegen zu Verpackungen konfektioniert werden, die einen wiederverschließbaren Verschluss aufweisen. Diese Ausführungsformen werden üblicherweise als Siegelklebstoff bezeichnet.

Der erfindungsgemäß geeignete Kaschierklebstoff enthält TPU, die keine weiteren reaktiven Isocyanate oder Isocyanatgruppen enthalten. Weiterhin ist durch die Reaktionsführung sichergestellt, dass auch keine Hydrolyseprodukte von Isocyanaten mit Wasser, insbesondere primäre aromatische Amine enthalten sind. Der erfindungsgemäße TPU ist ein Schmelzklebstoff, d. h. er ist frei von organischen Lösemitteln oder Weichmachern. Es ist möglich, die weiteren Additive so auszuwählen, dass diese Additive ein höheres Molekulargewicht aufweisen. Dadurch werden sie stabil in der Klebstoffmatrix eingearbeitet, weisen also keine oder nur eine verminderte Diffusionsfähigkeit auf. Deswegen sind Folienverbunde aus Folien verklebt mit einem erfindungsgemäßen Kaschierklebstoff geeignet, als Verpackung für empfindliche Güter, beispielsweise Lebensmittel oder medizinische Artikel eingesetzt zu werden.

Die erfindungsgemäß hergestellten Foliensubstrate können für verschiedene Arten von Verpackungen eingesetzt werden. Es kann sich dabei um Lebensmittelverpackungen, Verpackungen für medizinische Zwecke oder andere Folienverpackungen handeln. Es ist auch möglich, die erfindungsgemäß verklebten Substrate nach der Herstellung von Verpackungsgegenständen zu sterilisieren. Das kann beispielsweise durch Bestrahlung geschehen. Durch die Auswahl der TPU ist auch unter Belastung durch Feuchtigkeit keine Delamination festzustellen.

Insbesondere betrifft die vorliegende Erfindung:
1. Verwendung eines Schmelzklebstoffs mit einer Viskosität von 10000 mPas bis 150000 mPas bei 140°C enthaltend mindestens 75 Gew.-% eines thermoplastischen Polyurethans (TPU) mit einem zahlenmittleren Molekulargewicht M_{N} von 5000 bis 50000 g/mol als Klebstoff zum Verkleben von Foliensubstraten.
2. Verwendung nach Ausführungsform 1, dadurch gekennzeichnet, dass der Schmelzklebstoff zusätzlich bis zu 25 Gew.-% Additive und Zusatzstoffe enthält.
3. Verwendung nach Ausführungsform 1, dadurch gekennzeichnet, dass der Schmelzklebstoff frei von Lösemitteln, Weichmachern, Wachsen und Harzen ist.
4. Verwendung nach einer der Ausführungsformen 1 bis 3, dadurch gekennzeichnet, dass das thermoplastische Polyurethan hergestellt wird aus aromatischen Polyisocyanaten und Polyesterdiolen mit einem NCO:OH-Verhältnis von 0,75 bis 0,99 : 1.
5. Verwendung nach einer der Ausführungsformen 1 bis 4, dadurch gekennzeichnet, dass die Schichtdicke des aufgetragenen Klebstoffs unter 20 µm beträgt.
6. Verwendung nach einer der Ausführungsformen 1 bis 5, dadurch gekennzeichnet, dass das thermoplastische Polyurethan Polyesterpolyole als Polyolkomponente enthält.
7. Verwendung nach Ausführungsform 6, dadurch gekennzeichnet, dass das thermoplastische Polyurethan zusätzlich 0,5 bis 10 Gew.-% aliphatische Diole und/oder Triole mit bis zu 8 C-Atomen enthält.
8. Verwendung nach Ausführungsform 6, dadurch gekennzeichnet, dass der abgekühlte Schmelzklebstoff nach Auftragen als Schicht blockfest ist.
9. Verwendung nach Ausführungsform 8, dadurch gekennzeichnet, dass eine beidseitig verklebte Schicht des Schmelzklebstoffs durch kohäsiven Bruch trennbar ist.
10. Verwendung nach Ausführungsform 6 bis 9, dadurch gekennzeichnet, dass das NCO-OH-Verhältnis von 0,85 - 0,99 : 1 beträgt.
11. Verwendung nach Ausführungsform 1 bis 10, dadurch gekennzeichnet, dass eine Klebstoffschicht thermisch aktivierbar ist.
12. Folienverbund enthaltend eine Kunststofffolie und eine metallisierte oder Metall-Folie, die flächig durch einen TPU-Klebstoff gemäß einer Verwendung nach Ausführungsform 1 bis 6 miteinander verbunden sind.
13. Folienverbund aus einen Kunststoffsubstrat und einer Folie, die an mindestens einem Randbereich mit einem TPU-Klebstoff gemäß einer Verwendung nach Ausführungsform 6 bis 11 miteinander verbunden sind.
14. Folienverbund nach Ausführungsform 13, dadurch gekennzeichnet, dass die Folien in der Verklebungsschicht durch kohäsiven Bruch getrennt werden können.
15. Folienverbund nach einer der Ausführungsformen 12 bis 14 zum Herstellen von Verpackungen für Lebensmittel oder in der pharmazeutischen Industrie.

### Beispiele:

### Beispiel 1

Es wird eine OH-terminiertes thermoplastisches PU hergestellt aus einem Polyester (Isophthalsäure, Adipinsäure, Diethylenglykol, OHZ 138) 77,4% umgesetzt in der Schmelze mit MDI 22,6% , NCO:OH 0,95:1.
Molekulargewicht: 20000g/mol (GPC)
Viskosität: 50000mPas (Kegel/Platte, 140°C, Scherrate 50 s⁻¹)

### Beispiel 2

Es wird eine OH-terminiertes thermoplastisches PU hergestellt aus einem Polyester (Isophthalsäure, Adipinsäure, Diethylenglykol, OHZ 64) 89,7% umgesetzt in der Schmelze mit MDI 10,3% , NCO:OH 0,8:1.
Molekulargewicht: 10000g/mol (GPC)
Viskosität: 15000mPas (Kegel/Platte, 140°C, Scherrate 50)

### Beispiel 3

Aus einem TPU nach Beispiel 1 wird zusammen mit 0,5% eines Aminosilans und 0,5 % eines Stabilisators (Irganox 1010) ein Schmelzklebstoff hergestellt.

Aus den Klebstoffen der Beispiele 1 bis 3 werden Folienverbunde hergestellt.
a) AI gegen PE-Folie
b) OPP gegen met. OPP-Folie
c) PA gegen OPP-Folie
Kaschierung im Labor mit ca 7 g/m² oder mit ca. 3 g/m²

Es entstehen stabile Verbunde mit guter Optik.
Die Verbundhaftung beträgt bei a) (7g/m²) : 6,5 N/15mm.
Die Verbundhaftung beträgt bei b) (7g/m²) : 2,5 N/15mm.
Die Verbundhaftung wird mit einer Zugprüfmaschine Typ Instron 4301 gemessen.

Dabei werden Prüfkörper von 15mm Breite hergestellt und mit einer Reißgeschwindigkeit von 100 mm /min bei 25°C vermessen. Der Zugwinkel beträgt 90°.

### Beispiel 4

Es wird eine OH-terminiertes thermoplastisches PU hergestellt aus einem Polyester (Isophthalsäure, Adipinsäure, Diethylenglykol, OHZ 138) 77,0% und 0,7 % Hexandiol umgesetzt in der Schmelze mit MDI in einem NCO:OH -Verhältnis 0,95:1.

Der Klebstoff wird im Labor mit 10 µm auf eine Polyesterfolie (ca. 30 µm) aufgetragen und nach dem Abkühlen gegen eine gleiche Polyesterfolie gelegt und für 24 h bei 23°C mit 10 to gepresst und gelagert.
Nach der Lagerung können die Folien ohne Folienriss von Hand getrennt werden.

## Patentansprüche

1. Verwendung eines Schmelzklebstoffs mit einer Viskosität von 10000 mPas bis 150000 mPas bei 140°C enthaltend mindestens 75 Gew.-% eines thermoplastischen Polyurethans (TPU) mit einem zahlenmittleren Molekulargewicht M_{N} von 5000 bis 50000 g/mol als Klebstoff zum Verkleben von Foliensubstraten.

2. Verwendung nach Anspruch 1, **dadurch gekennzeichnet, dass** der Schmelzklebstoff zusätzlich bis zu 25 Gew.-% Additive und Zusatzstoffe enthält.

3. Verwendung nach Anspruch 1, **dadurch gekennzeichnet, dass** der Schmelzklebstoff frei von Lösemitteln, Weichmachern, Wachsen und Harzen ist.

4. Verwendung nach einem der Ansprüche 1 bis 3, **dadurch gekennzeichnet, dass** das thermoplastische Polyurethan hergestellt wird aus aromatischen Polyisocyanaten und Polyesterdiolen mit einem NCO:OH-Verhältnis von 0,75 bis 0,99 : 1.

5. Verwendung nach einem der Ansprüche 1 bis 4, **dadurch gekennzeichnet, dass** die Schichtdicke des aufgetragenen Klebstoffs unter 20 µm beträgt.

6. Verwendung nach einem der Ansprüche 1 bis 5, **dadurch gekennzeichnet, dass** das thermoplastische Polyurethan Polyesterpolyole als Polyolkomponente enthält.

7. Verwendung nach Anspruch 6, **dadurch gekennzeichnet, dass** das thermoplastische Polyurethan zusätzlich 0,5 bis 10 Gew.-% aliphatische Diole und/oder Triole mit bis zu 8 C-Atomen enthält.

8. Verwendung nach Anspruch 6, **dadurch gekennzeichnet, dass** der abgekühlte Schmelzklebstoff nach Auftragen als Schicht blockfest ist.

9. Verwendung nach Anspruch 8, **dadurch gekennzeichnet, dass** eine beidseitig verklebte Schicht des Schmelzklebstoffs durch kohäsiven Bruch trennbar ist.

10. Verwendung nach Anspruch 6 bis 9, **dadurch gekennzeichnet, dass** das NCO-OH-Verhältnis von 0,85 - 0,99 : 1 beträgt.

11. Verwendung nach Anspruch 1 bis 10, **dadurch gekennzeichnet, dass** eine Klebstoffschicht thermisch aktivierbar ist.

12. Folienverbund enthaltend eine Kunststofffolie und eine metallisierte oder Metall-Folie, die flächig durch einen TPU-Klebstoff gemäß einer Verwendung nach Anspruch 1 bis 6 miteinander verbunden sind.

13. Folienverbund aus einen Kunststoffsubstrat und einer Folie, die an mindestens einem Randbereich mit einem TPU-Klebstoff gemäß einer Verwendung nach Anspruch 6 bis 11 miteinander verbunden sind.

14. Folienverbund nach Anspruch 13, **dadurch gekennzeichnet, dass** die Folien in der Verklebungsschicht durch kohäsiven Bruch getrennt werden können.

15. Folienverbund nach einem der Ansprüche 12 bis 14 zum Herstellen von Verpackungen für Lebensmittel oder in der pharmazeutischen Industrie.

## Claims

1. Use of a hot-melt adhesive having a viscosity of from 10000 mPas to 150000 mPas at 140 °C, and containing at least 75 wt.% of a thermoplastic polyurethane (TPU) having a number average molecular weight M_{N} of from 5000 to 50000 g/mol, as an adhesive for adhesively bonding film substrates.

2. The use according to claim 1, **characterized in that** the hot-melt adhesive additionally contains up to 25 wt.% of additives and addition agents.

3. The use according to claim 1, **characterized in that** the hot-melt adhesive is free of solvents, plasticizers, waxes and resins.

4. The use according to one of claims 1 to 3, **characterized in that** the thermoplastic polyurethane is produced from aromatic polyisocyanates and polyester diols having an NCO:OH ratio of from 0.75 to 0.99:1.

5. The use according to one of claims 1 to 4, **characterized in that** the layer thickness of the applied adhesive is less than 20 µm.

6. The use according to one of claims 1 to 5, **characterized in that** the thermoplastic polyurethane contains polyester polyols as a polyol component.

7. The use according to claim 6, **characterized in that** the thermoplastic polyurethane additionally contains 0.5 to 10 wt.% aliphatic diols and/or triols having up to 8 C atoms.

8. The use according to claim 6, **characterized in that** the cooled hot-melt adhesive is non-blocking after being applied as a layer.

9. The use according to claim 8, **characterized in that** a layer of the hot-melt adhesive that has been adhesively bonded on both sides can be separated by cohesive fracture.

10. The use according to claims 6 to 9, **characterized in that** the NCO-OH ratio is from 0.85 - 0.99: 1.

11. The use according to claims 1 to 10, **characterized in that** an adhesive layer can be thermally activated.

12. A film composite containing a plastics film and a metallized or metal film which are planar interconnected by a TPU adhesive in accordance with the use according to claims 1 to 6.

13. A film composite made from a plastics substrate and a film which are interconnected at at least one edge region by means of a TPU adhesive in accordance with the use according to claims 6 to 11.

14. The film composite according to claim 13, **characterized in that** the films in the adhesive bonding layer can be separated by cohesive fracture.

15. The film composite according to one of claims 12 to 14 for producing packaging for food items or in the pharmaceutical industry.

## Revendications

1. Utilisation d'un adhésif fusible ayant une viscosité de 10 000 mPas à 150 000 mPas à 140 °C et contenant au moins 75 % en poids d'un polyuréthane thermoplastique (TPU) de poids moléculaire moyen M_{N} de 5000 à 50 000 g/mol comme adhésif pour coller des substrats en films.

2. Utilisation selon la revendication 1, **caractérisée en ce que** l'adhésif fusible contient en outre jusqu'à 25 % en poids d'additifs et d'adjuvants.

3. Utilisation selon la revendication 1, **caractérisée en ce que** l'adhésif fusible est exempt de solvants, de plastifiants, de cires et de résines.

4. Utilisation selon l'une des revendications 1 à 3, **caractérisée en ce que** le polyuréthanne thermoplastique est produit à partir de polyisocyanates aromatiques et de polyesters de diols ayant un rapport NCO:OH de 0,75 à 0,99:1.

5. Utilisation selon l'une des revendications 1 à 4, **caractérisée en ce que** l'épaisseur de couche de l'adhésif appliqué est inférieure à 20 µm.

6. Utilisation selon l'une des revendications 1 à 5, **caractérisée en ce que** le polyuréthane thermoplastique contient comme composants polyols des polyesters de polyols.

7. Utilisation selon la revendication 6, **caractérisée en ce que** le polyuréthane thermoplastique contient en outre de 0,5 à 10 % de diols et/ou de triols aliphatiques ayant jusqu'à 8 atomes de carbone.

8. Utilisation selon la revendication 6, **caractérisée en ce que** l'adhésif fusible refroidi est non agglomérant après application en couche.

9. Utilisation selon la revendication 8, **caractérisée en ce qu'**une couche d'adhésif thermofusible, collée des deux côtés, est séparable par rupture cohésive.

10. Utilisation selon les revendications 6 à 9, **caractérisée en ce que** le rapport NCO:OH va de 0,85:1 à 0,99:1.

11. Utilisation selon les revendications 1 à 10, **caractérisée en ce qu'**une couche d'adhésif est activable thermiquement.

12. Film composite comprenant un film de matière synthétique et un film métallisé ou métallique qui sont reliés entre eux à plat par un adhésif TPU conformément à une utilisation selon les revendications 1 à 6.

13. Film composite comprenant un substrat de matière synthétique et un film qui sont reliés entre eux au niveau d'au moins une zone de bord par un adhésif TPU conformément à l'utilisation selon les revendications 6 à 11.

14. Film composite selon la revendication 13, **caractérisé en ce que** les films peuvent être séparés par rupture cohésive dans la couche de liaison.

15. Film composite selon l'une des revendications 12 à 14 destiné à la fabrication d'emballages alimentaires ou d'emballages destinés à l'industrie pharmaceutique.
